(19) Europäisches Patentamt

European Patent Office

Office européen des brevets

(11) Publication number: 0 273 056 B1

# (12) EUROPEAN PATENT SPECIFICATION

(45) Date of publication of patent specification: 29.07.92

(51) Int. Cl.5: **B60C 9/08**, B60C 9/18, B60C 15/02, B60C 15/06, B60C 17/08

(21) Application number: 87902780.3

(22) Date of filing: 11.05.87

(86) International application number: PCT/JP87/00298

(87) International publication number: WO 87/06891 (19.11.87 87/25)

(54) RADIAL TIRE AND ASSEMBLY OF RADIAL TIRE AND RIM.

(30) Priority: 16.05.86 JP 113200/86

(43) Date of publication of application:
06.07.88 Bulletin 88/27

(45) Publication of the grant of the patent:
29.07.92 Bulletin 92/31

(84) Designated Contracting States:
DE FR GB

(56) References cited:
EP-A- 0 008 511         DE-A- 3 314 563
GB-A- 2 117 330         JP-A- 4 992 705
JP-A- 5 529 650         JP-A- 9 179 405
JP-A-49 927 704         JP-A-52 432 204
JP-A-56 120 406         JP-A-58 112 810
JP-B- 538 405           JP-B- 5 522 282
JP-B- 5 526 004         JP-B- 5 715 007
JP-B- 5 744 482         JP-U-57 142 605

(73) Proprietor: SUMITOMO RUBBER INDUSTRIES LIMITED
No. 1-1, Tsutsui-cho 1-chome
Chuo-ku Kobe-shi Hyogo 651(JP)

(72) Inventor: NOMA, Hiroyuki
16-3, Suzurandai Kitamachi 3-chome
Kita-ku, Kobe-shi Hyogo 651-11(JP)
Inventor: SAITOU, Saneto Room 514, Port-Island Danchi 54
3-1, Minatojima Nakamachi 3-chome
Chuo-ku, Kobe-shi Hyogo 650(JP)

(74) Representative: Stewart, Charles Geoffrey et al
SP TYRES UK LIMITED Tyre Technical Division
Fort Dunlop Birmingham B24 9OT(GB)

EP 0 273 056 B1

## Description

The present invention relates to a radial tyre, and more particularly, it relates to a so-called safety tyre particularly for four-wheeled cars which permits the driver to continue safe driving even when tyre inflation pressure has suddenly decreased due to puncture or burst because it supports the weight of the car with the rigid side and the deformable tread in such an event. The present invention also relate to a radial tyre and wheel rim assembly which keeps the beads in place on the rim even in the case of puncture or at the time of sharp cornering.

There have been several kinds of tyres designed to be safe even in the case of puncture or burst. They include, for example, a safety tyre having a support of elastic material in the tyre, a dual structure tyre having an independent toroidal air-tight compartment in the tyre, and a reinforced tyre with the sidewall or shoulder reinforced with an elastic reinforcing layer attached to the inside thereof.

The first two types have a problem with increased weight (undesirable for a high speed tyre) and increased production cost. The last type is not strong enough to firmly support the load.

Alternatively in motorcycle tyre technology it has been proposed, for example in EP-A-0133255 (corresponding to the preamble of claim 1), to improve the lateral instability due to the flexibility of the radial carcass by a novel carcass structure which combines all the advantages of the behaviour of a radial carcass and all the structural advantages of a cross-ply carcass.

Accordingly, it is an object of the present invention to provide a new radial tyre which, despite its structure being entirely different from that of the above-mentioned conventional ones, provides as good ride comfort and stable manoeuvrability as ordinary tyres during normal driving.

For safe driving, the tyre should be firmly held in position on the rim. Heretofore, this has been achieved mainly by the frictional force which is generated between the bead and the bead seat as the bead is pressed against the bead seat by the tyre pressure. Therefore, the power to hold the tyre on the rim decreased as the tyre pressure decreased. In an extreme case where the tyre pressure has decreased rapidly due to puncture and the steering wheel is turned quickly, the tyre bead separates from the bead seat and falls into the well because of the lateral force applied to the tyre. As a result the tyre gets out of place completely, which leads to a serious accident.

Separation of the tyre bead from its seat takes place in the following sequence. The cornering of a car produces a lateral force which moves the tread in the axial direction of the rim. This movement of the tread produces a moment of rotation around the bead. When tyre pressure is low, this moment of rotation lifts the heel of the bead, decreasing the frictional force between the bead and the bead set to such an extent that the bead slips out of place in the inward direction of the tyre axis. In this state the bead core loses tension to keep the tyre on the rim and falls into the well.

Prior attempts to prevent such inward slipping of the bead include for example the proposal in JP-U-57-142605 to provide in the tyre bead base a circumferential groove which is located over a corresponding hump on the wheel rim positioned under the bead core.

It is another object of the present invention to provide a radial tyre and wheel rim assembly which can run safely even when the tyre pressure has decreased.

According to the present invention a radial tyre is provided having an aspect ratio of no more than 60% comprising a pair of bead cores disposed one in each bead of the tyre, a carcass extending between the beads and turned up around said bead cores to be secured thereto, a bead apex disposed between each of the carcass turned up parts and the carcass main part and extending radially outward from the bead core, a tread with a curved surface disposed radially outside the carcass, and a belt having cords arranged between the carcass and the tread at a small angle to the circumferential direction of the tyre, said tread extended axially of the tyre so that the axial width TW thereof is wider than the maximum axial section width L of the carcass, and that the tread edges are positioned at a height ho in the range of 50 to 100% of the maximum cross-section height h of the carcass, characterised by said tread having extended edge portions, each having a width of 5 to 20% of the curved distance TL measured along the curved tread surface from one tread edge to the other tread edge, and each tread edge portion being provided with sipes having a width of 0.1 to 5mm arranged circumferentially of the tyre at intervals of 5 to 20mm.

The invention further provides an assembly composed of said radial tyre and a wheel rim having a well to facilitate the mounting of the tyre, characterised in that at least one of the said beads has a toe extending axially and radially inwardly, said toe having a hump groove formed axially outside the toe and said rim having an annular groove to mate with the tip of the toe and a hump to fit into the humped groove.

Further aspects of the present invention will become apparent from the following description, by way of example only of one embodiment of the present invention in conjunction with the attached diagrammatic drawings in which:-

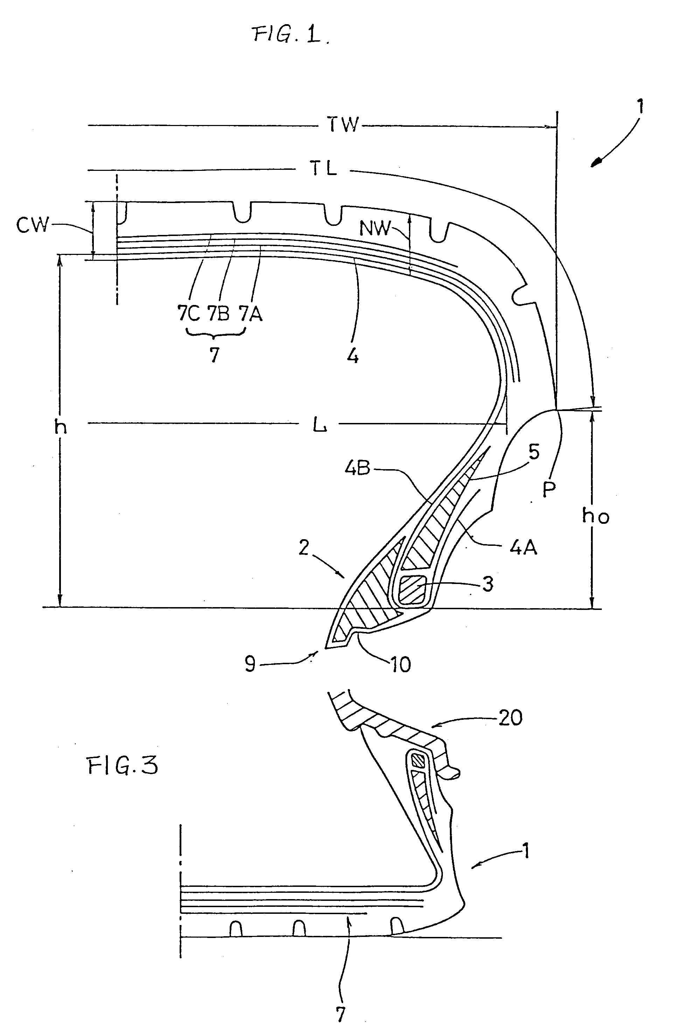

Fig. 1 is a sectional view showing the right half of an example of the radial tyre of the invention;

Fig. 2 is a perspective view of the radial tyre of the invention.

Fig.3. is a schematic sectional view of the radial tyre rim assembly of the invention, with the tyre pressure decreased

Fig.4. is a fragmentary sectional view of the radial tyre rim assembly.

The tyre shown comprises a pair of beads 2 each having a bead core 3. The tyre reinforcing carcass 4 extends from one bead 2 to the other and a tyre tread is arranged outside (in the radial direction of the tyre) the carcass 4, being reinforced by a belt layer 7 arranged between the carcass 4 and the tread 6.

The radial tyre of the invention has an aspect ratio smaller than 60% which is defined by dividing the height of the cross-section of the tyre by the maximum width of the tyre.

The carcass 4 has at least layer of carcass ply material composed of radially arranged cords. Each edge of the carcass is folded back (from inside to outside in the axial direction of the tyre) around the bead core 3 and fastened to the bead core 3.

The first feature of the radial tyre of the invention resides in that the tread 6 extends to that part of the tyre which corresponds to the side wall of the conventional tire. In other words, the tread 6 has such dimension that the width TW (in the axial direction) is greater than the maximum width L of the carcass 4, and the height $ho$ of the tread end P is within the range of 50 to 100% of the height h of the cross-section of the carcass 4.

In addition, the thickness of the tread 6 at both edges is within the range of 70 to 200% of the average value of the thickness CW at the tread centre and the thickness NW at the position three quarters of the maximum width L of the carcass 4 measured from the tread centre. If it is smaller than 70%, the tyre does not have sufficient rigidity to ensure safe running when the tyre pressure has decreased, and if it is higher than 200% the tyre generates excessive heat during high speed running.

The structure as mentioned above provides the difference in rigidity which functions as a hinge to join the tread and the tyre side. Thus, when the tyre pressure decreases, the tread and the tyre side turn on the hinge as shown in Fig.3, and the tread 6 as a whole becomes flat to ensure safe running.

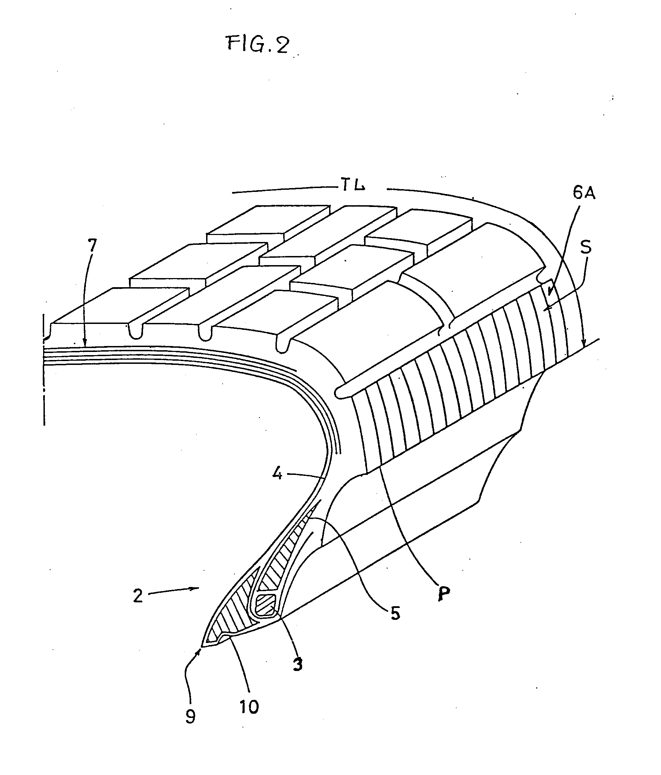

The extended part 6A of the tread is formed in rib pattern or block pattern and is provided with sipings or line grooves S to increase heat dissipation as shown in Fig.2. The sipings or fine grooves S are formed in the formed in the region corresponding to 5 to 20% of the curved distance TL from one tread end P to the other tread end along the surface of the tread 6. Their interval is 5 to 20 mm and their width is 0.1 to 5mm. If they are formed at an angle of 45 to 90 degrees with respect to the circumferential direction of the tyre, they promote heat dissipation, and if their angle is 0 to 45 degrees, not only do they promote heat dissipation but they also lower the vertical spring constant which leads to improved ride comfort. Thus the angle is selected according to the application.

The belt layer 7 is arranged between the carcass 4 and the tread 6, and it has cords arranged slightly aslant with respect to the circumferential direction of the tyre. In this example, the cords are composed of low-modulus organic fibre cords (forming the plies 7A and 7B) and high-modulus organic or inorganic fibre cords (forming the ply 7C).

The width of the belt layer 7 (or the width of the plies 7A and 7B in this example) is within the range of 70 to 100% of the curved distance TL along the surface of the tread 6. The belt layer 7 extended to both edges of the tread 6 reinforces the tread 6 even when the tyre pressure has decreased and the tread 6 has become flat, so that the flat tyre continues to run for a long time.

Suitable low modulus organic fibre cords include those of nylon, polyester, and rayon which have an elastic modulus lower than 1000 kg/mm . The Organic fibre cords of low elastic modulus are preferably used because the same ply produces the "hoop effect" on the crown, shoulders, and side which differ from one another in the radius of curvature.

Suitable low modulus fibre cords include aramid cords and steel cords. The ply 7C composed of the high modulus fibre cord should have a width which is smaller than 80% of the maximum width L of the carcass 4.

The bead 2 is composed of the non extensible bead core 3, and a bead apex 5, the toe 9 of which extends inward (in the radial direction of the tyre) and a hump groove 10.

The bead core 3 is positioned outside (in the axial direction of the tyre) unlike that of the conventional radial tyre. This is one of the features of the present invention. The bead core 3 is positioned such that the distance W4 from the centre of the bead core 3 to the heel end J is 1/2.5 to 1/7.6 preferably 1/2.9 to 1/6.3 of the distance between the heal end J and the toe end N. In the case of conventional tyres, it is about 1/2.2 at the shortest. Incidentally, the heel end J is the point at which the extended line of the outer surface Q of the bead 2 intersects the extended line of the bottom surface M. The advantages of reducing the distance W4 is that the bead core 3 is close to the rim flange 25 and the bead firmly fits into the rim 20.

The bead apex 5 is made of rubber having a hardness of 74 to 95 degrees JIS(A). It is arranged between the carcass proper 4B and the folded part 4A of the carcass, and it extends outwardly (in the radial direction of the tyre) from the bead core 3. The bead apex 5 is as high as 70-90%, preferably 40-110% of the height ho up to the end P of the tread 6. A bead apex longer than 110% is not preferable because it hinders the above mentioned hinge action. The bead apex of the specified length maintains the rigidity of the tyre side when the tire pressure has decreased, thereby permitting the safe driving.

The toe 9 projects inwardly (in the axial direction of the tyre) from the bead core 3 and also inwardly (in the radial direction of the tyre) from the bottom surface M of the bead 2. The amount L of projection is properly selected according to the use and size of the tyre. The toe 9 is made of comparatively hard rubber having a hardness of 70-85 degrees JIS (A).

The hump groove 10 is formed outside (in the axial direction of the tyre) the toe 9, and it extends in the circumferential direction of the tyre. The distance W5 (in the axial direction of the tyre) between the humped groove 10 and the heel end J is 2.1 to 4.8 times the distance W4 (in the axial direction o the tyre) between the heel end J and the centre of the bead core 3. The humped groove 10 permits the radial tyre 1 of the present invention to snugly fit on to a rim 20 having a hump 23 (mentioned later). The radial tyre of the invention can also fit into a rim without the hump 23.

The rim 20 has a well 21 at the centre and an annular groove 22, hump 23, bead seat 24, and rim flange 25 formed in the order mentioned outside the well. The annular groove 22 is adjacent to the well 21, and it extends in the circumferential direction of the tyre. Thus a protuberance 26 extending in the circumferential direction is formed inside the annular groove 2. The height H1 of the protuberance 26 should preferably be 5mm or less from the bead seat 24. The top of the protuberance 26 may be below the bead seat 24.

The bottom of the annular groove 22 should be inward (in the radial direction of the tyre) from the bead seat 24, and the depth d should preferably be 10mm or less from the bead seat 24. In addition, the annular groove 22 should be positioned such that the relationship W6/W3 = 0.7 to 1.2 is established. where W6 is the distance between the heel end J and the toe end N and W3 is the distance between the deepest part of the annular groove 22 and the end H of the bead seat 24. The end H of the bead seat 24 is the point at which the prolonged line of the bead beat 24 intersects the extended line of the inner surface of the rim flange 25.

The hump 23 is formed such that the relationship W5/W2 = 0.5 to 1.2 is established, where W5 is the distance (in the axial direction of the tyre) between the humped groove 10 and the heel end J and W2 is the distance (in the axial direction of the tyre) between the outermost end (in the radial direction of the tyre) of the tyre and the end H of the bead seat. The height h2 of the hump 23 should preferably be smaller than 5mm from the bead seat 24.

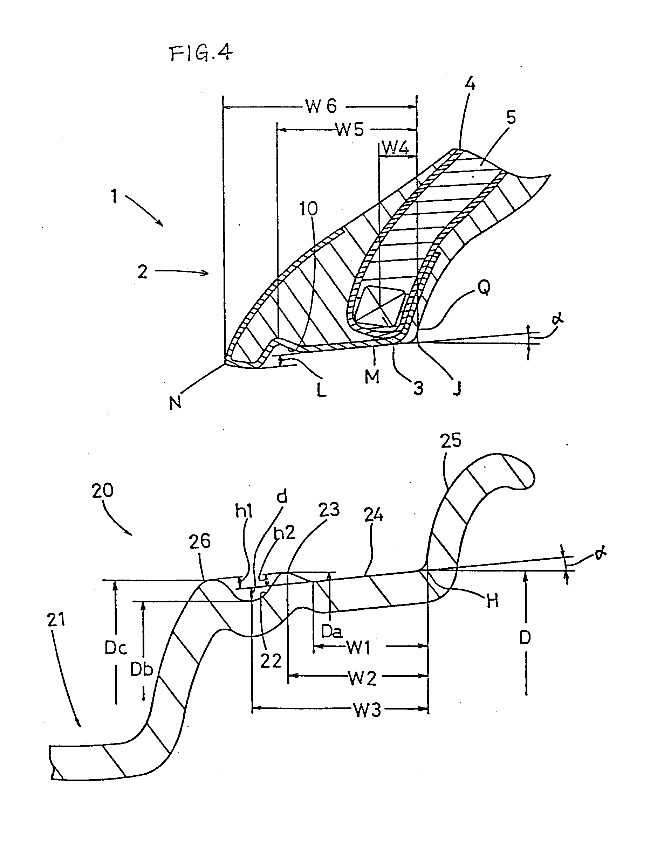

The bead seat 24 is slightly tapered inward (in the axial direction of the tyre) at a certain angle ($\alpha$) as shown in Fig.4. The bead seat may also be inversely tapered, if necessary.

The width W1 of the bead seat 24 conforms to the existing standards, so that the rim 20 fits into the radial tyre of the invention as well as the radial tyre of conventional structure.

The toe 9 and humped groove 10 of the radial tyre 1 and the annular groove 22 and hump of the rim should have proper shapes and dimensions so that they snugly fit into each other. In addition, the diameter of the rim at different parts should be determined so that the following relationship are established.

$$-3.0mm \leqslant D-Da+ \leqslant +5.0mm$$
$$+2.0mm \leqslant D-Db \leqslant +2.0mm$$
$$0.0mm \leqslant D-Dc \leqslant +5.0mm$$
$$Da > Dc > Db$$

wherein D is the diameter at the end H of the bead seat, Da is the diameter at the hump 23, Db is the diameter at the bottom of the annular groove 22, and Fc is the diameter at the protuberance 26, as shown in Fig.4.

The diameter Da at the hump is made greater than the Dc at the protuberance so as to facilitate the fitting of the tyre bead.

As mentioned above, the radial tyre of the present invention has a tread, with both edges extending to the tyre sides. Therefore, the tread becomes flat and comes into contact with the ground as schematically shown in Fig.2 when the tyre pressure has decreased due to puncture, thereby preventing the side from coming into contact with the ground and protecting it from damage by the contacting with the ground. In addition, the side having increased rigidity supports the weight of the vehicle. Therefore, the radial tyre of the invention permits safe driving even with the tyre pressure decreased.

The radial tyre rim assembly of the invention, which is characterised in that the radial tyre has the toe extending inward (in the radial direction of the tyre) and the rim has the annular groove to mate with the toe, keeps the tyre in position when the tyre pressure has decreased and the tyre received a lateral force, thereby ensuring continued safe driving.

According to this example, the bead core is close to the rim flange and the radial tyre has the humped groove and the rim has the hump which fits into the humped groove. These arrangements enhanced the power of the rim to hold the tyre in place and hence ensure safer driving.

Incidentally, it is also possible to apply the above mentioned bead structure to only one or either of the beads.

The present invention may be applied to various kinds of vehicles such as passenger cars, motorcycles, tricycles, all-terrain vehicles, trucks, and busses.

## Claims

1. A radial tyre (1) having an aspect ratio of no more than 60% comprising a pair of bead cores (3) disposed one in each bead (2) of the tyre, a carcass (4) extending between the beads (2) and turned up around said bead cores (3) to be secured thereto, a bead apex (5) disposed between each of the carcass turned up parts (4A) and the carcass main part (4B) and extending radially outward from the bead core (3), a tread (6) with a curved surface disposed radially outside the carcass (4), and a belt (7) having cords arranged between the carcass (4) and the tread (6) at a small angle to the circumferential direction of the tyre, said tread (6) extended axially of the tyre so that the axial width TW thereof is wider than the maximum axial section width L of the carcass (4), and that the tread edges (P) are positioned at a height ho in the range of 50 to 100% of the maximum cross-section height h of the carcass (4), characterised by said tread (6) having extended edge portions (6A), each having a width of 5 to 20% of the curved distance TL measured along the curved tread surface from one tread edge (P) to the other tread edge, and each tread edge portion being provided with sipes (S) having a width of 0.1 to 5mm arranged circumferentially of the tyre at intervals of 5 to 20mm.

2. A radial tyre according to claim 1 characterised in that the sipes (S) in the extended tread edge portions are formed at an angle of between 45-90 degrees with respect to the tyre circumferential direction.

3. A radial tyre according to claim 1 characterised in that the sipes (S) in the extended tread edge portions are formed at an angle of less than 45 degrees with respect to the circumferential direction of the tyre.

4. An assembly composed of a radial tyre (1) according to one of the preceding claims and a wheel rim (30) having a well (21) to facilitate the mounting of the tyre, characterised in that at least one of the said beads (2) has a toe (9) extending axially and radially inwardly, said toe (9) having a hump groove (10) formed axially outside the toe and said rim (20) having an annular groove (22) to mate with the tip of the toe (9) and a hump (23) to fit into the humped groove (10).

5. An assembly as claimed in claim 4, characterised in that the tread (6) has a thickness at both edges thereof which is within the range of 70 to 200% of the tread average value of the thickness at the tread centre and the thickness at the position three quarters of the maximum width of the carcass measured from the tread centre.

6. An assembly as claimed in claim 4 or 5 characterised in that the belt layer (7) has a width which is within the range of 70 to 100% of the curved distance along the surface of the tread.

7. An assembly as claimed in any of claims 4 to 6 characterised in that the belt layer (7) has at least one ply compound of organic fibre cords having an elastic modulus lower than 100 kg/mm.

8. An assembly as claimed in any of claims 4 to 7 characterised in that the bead apex (5) extends up to 40 to 100% of the height of the edge of the tread.

9. An assembly as claimed in any of claims 4 to 8 characterised in that the bead core (3) is formed within such a range that the distance from the bead core centre to the heel end is 1/2.5 to 1/7.6 of the distance from the heel end to the toe end.

## Revendications

1. Pneumatique à carcasse radiale (1) ayant un rapport d'allongement qui ne dépasse pas 60 %, comprenant une paire de tringles (3) disposées chacune dans un talon (2) du pneumatique, une carcasse (4) disposée entre les talons (2) et repliée autour des tringles (3) afin qu'elle soit fixée à celles-ci, une pointe de bourrage (5) de talon placée entre chacune des parties repliées (4A) de carcasse et la partie principale (4B) de la carcasse et disposée radialement vers l'extérieur de la tringle (3), une bande de roulement (6) ayant une surface courbe disposée radialement vers l'extérieur de la carcasse (4), et une ceinture (7) ayant des câblés placés entre la carcasse (4) et la bande de roulement (6) et formant un petit angle avec la direction circonférentielle du pneumatique, la bande de roulement (6) étant disposée axialement par rapport au pneumatique de manière que sa largeur axiale TW soit supérieure à la largeur maximale axiale L en coupe de la carcasse (4), et les bords (P) de la bande de roulement se trouvent à une hauteur ho qui est comprise entre 50 et 100 % de la hauteur h de la section maximale de la carcasse (4), caractérisé en ce que la bande de roulement (6) a des parties de bord (6A) formant des prolongements ayant chacun une largeur comprise entre 5 et 20 % de la distance courbe TL mesurée le long de la surface courbe de la bande de roulement d'un bord (P) de la bande de roulement à l'autre bord de la bande de roulement, et chaque partie de bord de bande de roulement a des fentes de lamelles (S) dont la largeur est comprise entre 0,1 et 5 mm et qui sont placées circonférentiellement par rapport au pneumatique à des intervalles de 5 à 20 mm.

2. Pneumatique à carcasse radiale selon la revendication 1, caractérisé en ce que les fentes (S) de délimitation de lamelles formées dans les parties des bords de la bande de roulement sont réalisées avec un angle compris entre 45 et 90° par rapport à la direction circonférentielle du pneumatique.

3. Pneumatique à carcasse radiale selon la revendication 1, caractérisé en ce que les fentes (S) délimitant les lamelles formées dans les parties des bords de la bande de roulement forment un angle inférieur à 45° avec la direction circonférentielle du pneumatique.

4. Ensemble composé d'un pneumatique à carcasse radiale (1) selon l'une quelconque des revendications précédentes et d'une jante (30) de roue ayant une cavité (21) destinée à faciliter le montage du pneumatique, caractérisé en ce que l'un des talons (2) au moins a un coin interne (9) dirigé axialement et radialement vers l'intérieur, ce coin interne (9) ayant une gorge (10) de logement de bosse formée axialement à l'extérieur du coin interne, et la jante (20) a une gorge annulaire (22) destinée à coopérer avec le bout du coin interne (9) et une bosse (23) destinée à se loger dans la gorge (10) de logement de bosse.

5. Ensemble selon la revendication 4, caractérisé en ce que la bande de roulement (6) a, à ses deux bords, une épaisseur qui est comprise entre 70 et 200 % de la valeur moyenne de l'épaisseur au centre de la bande de roulement et de l'épaisseur aux trois-quarts de la largeur maximale de la carcasse à partir du centre de la bande de roulement.

6. Ensemble selon la revendication 4 ou 5, caractérisé en ce que la couche (7) de ceinture a une largeur comprise entre 70 et 100 % de la distance courbe mesurée le long de la surface de la bande de roulement.

7. Ensemble selon l'une quelconque des revendications 4 à 6, caractérisé en ce que la couche (7) de ceinture a au moins une nappe formée de câblés de fibres organiques ayant un module élastique inférieur à 100 kg/mm.

8. Ensemble selon l'une quelconque des revendications 4 à 7, caractérisé en ce que la pointe de bourrage (5) de talon remonte sur une distance comprise entre 40 et 100 % de la hauteur du bord de la bande de roulement.

9. Ensemble selon l'une quelconque des revendications 4 à 8, caractérisé en ce que la tringle (3) est formée dans une région telle que la distance comprise entre le centre de la tringle et l'extrémité de coin externe est comprise entre 1/2,5 et 1/7,6 fois la distance comprise entre l'extrémité du coin externe et l'extrémité interne.

## Patentansprüche

1. Radialreifen (1) mit einem Querschnittsverhältnis von nicht mehr als 60%, der umfaßt zwei Wulstkerne (3), die jeweils einzeln in jedem Wulst (2) des Reifens angeordnet sind, einer sich zwischen den Wulsten (2) erstreckenden Karkasse (4), die über die Wulstkerne (3) zur Befestigung daran zurückgeschlagen ist, einen zwischen den jeweiligen Karkass-Aufschlagteilen (4A) und dem Hauptteil der Karkasse (4B) angeordneten Wulstreiter (5), der sich von dem Wulstkern (3) radial nach außen erstreckt, einen Laufstreifen (6) mit einer gekrümmten Oberfläche, der radial außerhalb der Karkasse (4) angeordnet ist und einen Gürtel (7) mit zwischen der Karkasse (6) und dem Laufstreifen mit einem kleinen Winkel zur Umfangsrichtung des Reifens angeordneten Korden, wobei der Laufstreifen (6) in Axialrichtung des Reifens so verbreitert ist, daß seine Axialbreite TW breiter als die maximale Axialquerschnittsbreite L der Karkasse (4) ist, und daß die Laufstreifenkanten (P) in einer Höhe ho im Bereich von 50 bis 100% der maximalen Querschnittshöhe h der Karkasse (4) liegen, dadurch gekennzeichnet, daß der Laufstreifen (6) verbreiterte Kantenabschnitte (6A) besitzt, die jeweils eine Breite von 5 bis 20% des gekrümmten, längs der gekrümmten Laufstreifenfläche von einer Laufstreifenkante (P) zur anderen Laufstreifenkante gemessenen Abstandes TL besitzt und jeder Laufstreifenkantenabschnitt mit Fein-Einschnitten (S) mit einer Breite von 0,1 bis 5 mm versehen ist, die in Umfangsrichtung des Reifens mit Abständen von 5 bis 20 mm angeordnet sind.

2. Radialreifen nach Anspruch 1, dadurch gekennzeichnet, daß die Fein-Einschnitte (S) in den erweiterten Laufstreifenkantenabschnitten mit einem Winkel zwischen 45 und 90° bezüglich der Reifen-Umfangsrichtung ausgebildet sind.

3. Radialreifen nach Anspruch 1, dadurch gekennzeichnet, daß die Fein-Einschnitte (S) in den verbreiterten Laufstreifen-Kantenabschnitten mit einem Winkel von weniger als 45° bezüglich der Umfangsrichtung des Reifens ausgebildet sind.

4. Anordnung aus einem Radialreifen (2) nach einem der vorangehenden Ansprüche und einer Radfelge (30) mit einem Tiefbett (21) zum Erleichtern des Aufziehens des Reifens, dadurch gekennzeichnet, daß mindestens ein Wulst (2) eine sich axial und radial nach innen erstreckende Zehe (9) besitzt, daß die Zehe (9) eine axial an ihrer Außenseite ausgebildete Höckernut (10) besitzt und die Felge (20) eine Ringnut (22) zum Anpassen an die Spitze der Zehe (9) und einen Ringhöcker (23) zum Einpassen in die Höckernut (10) besitzt.

5. Anordnung nach Anspruch 4, dadurch gekennzeichnet, daß der Laufstreifen (6) an seinen beiden Kanten eine Dicke aufweist, die im Bereich von 70 bis 200% des Laufstreifen-Durchschnittswerts der Dicke an der Laufstreifen-Mitte und der Dicke an der Stelle von drei Viertein der maximalen Breite der Karkasse, von der Laufstreifen-Mitte aus gemessen, liegt.

6. Anordnung nach Anspruch 4 oder 5, dadurch gekennzeichnet, daß die Gürtellage (7) eine Breite besitzt, die in einem Bereich von 70 bis 100% des längs der Oberfläche des Laufstreifens gemessenen gekrümmten Abstandes liegt.

7. Anordnung nach einem der Ansprüche 4 bis 6, dadurch gekennzeichnet, daß die Gürtellage (7) mindestens einen Lagen-Verbund aus organischen Faserkorden mit einem elastischen Modul unter 100 kp/mm besitzt.

8. Anordnung nach einem der Ansprüche 4 bis 7, dadurch gekennzeichnet, daß der Wulstreiter (5) sich bis zu 40 bis 100% der Höhe der Laufstreifenkante erstreckt.

9. Anordnung nach einem der Ansprüche 4 bis 8, dadurch gekennzeichnet, daß der Wulstkern (3) in einem solchen Bereich ausgebildet ist, daß der Abstand von dem Wulstkern-Zentrum zu dem Fersenende 1/2,5 bis 1/7,6 des Abstandes vom Fersenende zum Zehenende beträgt.

FIG.1.

FIG.3

FIG.2

FIG.4